# EUROPÄISCHE PATENTSCHRIFT

(11) **EP 3 455 050 B1**
(45) Veröffentlichungstag und Bekanntmachung des Hinweises auf die Patenterteilung: **09.09.2020**
(21) Anmeldenummer: 17721528.2
(22) Anmeldetag: 05.05.2017
(51) Int. Cl.: B29C 65/56, B29C 65/02, B29C 65/72, B29C 65/14, B29C 65/16, B29C 65/18, B29C 65/36

(54) **VERFAHREN UND VORRICHTUNG ZUM VERBINDEN VON BAUTEILEN**
METHOD AND DEVICE FOR CONNECTING COMPONENTS
PROCÉDÉ ET DISPOSITIF POUR ASSEMBLER DES COMPOSANTS

(30) Priorität: 13.05.2016 DE 102016005903
(43) Veröffentlichungstag der Anmeldung: 20.03.2019
(73) Patentinhaber: AUDI AG, 85045 Ingolstadt (DE)
(72) Erfinder: JENNE, Marco, 90584 Allersberg (DE); BAER, Carsten, 85049 Ingoldstadt (DE)
(86) Internationale Anmeldenummer: PCT/EP2017/000556
(87) Internationale Veröffentlichungsnummer: WO 2017/194186

(56) Entgegenhaltungen:
- EP-A1- 0 392 568
- WO-A1-2014/058413
- DE-A1-102014 203 761

## Beschreibung

Die Erfindung betrifft ein Verfahren zum Verbinden eines ersten Bauteils mit mindestens einem zweiten Bauteil und eine Anordnung zum Verbinden eines ersten Bauteils mit mindestens einem zweiten Bauteil.

Faserverstärkte Kunststoffe bestehen aus einer organischen Matrix, in die Fasern, z. B. Kohlenstoff-, Aramid- oder Glasfasern, entweder sortenrein oder gemischt eingebettet sind. Als Matrixwerkstoffe kommen duroplastische Polymere, wie z. B. Epoxidharz oder Polyurethan, oder thermoplastische Polymere, wie z. B. Polyamid, zum Einsatz. Aus faserverstärkten Kunststoffen werden Bauteile in verschiedensten Industriezweigen hergestellt. Im Fahrzeugbau können dies ganze Karosserien, z. B. ein Monocoque, aber auch einzelne Karosseriebauteile, z. B. ein Boden, ein Dach, eine Rückwand, ein Kotflügel oder ein Sideblade, sein. Hierbei sind metallische und/oder nichtmetallische Bauteile aneinanderzufügen. Eine übliche Verbindungstechnik ist eine Verschraubung, wobei mehrere Fügeteile aus faserverstärkten Kunststoffen als Klemmteil angeordnet werden. Beim Anziehen der Verschraubung längt sich eine verwendete Schraube, wobei die Fügeteile unter einer Druckspannung stehen. Dieses Wirkprinzip der Verschraubung ermöglicht eine Übertragung von Kräften bzw. Momenten und verhindert ein selbsttätiges Lösen der Fügeteile unter angreifenden äußeren Belastungen.

Faserverbundwerkstoffe bieten einem Konstrukteur die Möglichkeit, Werkstoffeigenschaften durch eine Faseranordnung an Bauteilbelastungen anzupassen. Üblich ist eine zweidimensionale Anordnung von Verstärkungsfasern. Im Fall einer Durchsteckverschraubung werden Bohrungen in einem Laminat erzeugt. Ein Montageprozess der Schraube erzeugt eine Vorspannkraft, die gleichermaßen auf das Laminat wirkt, das somit einer Querdruckbeanspruchung ausgesetzt wird.

Außerdem erfolgt zeitlich verzögert nach dem Anziehen der Verschraubung ein Fließen der Matrix aus Polymer, da eine eingeleitete Last nur äußerst ineffizient in eine Faserspannung umgewandelt werden kann und ein Hauptkraftfluss über die Matrix wirkt. Unter der beschriebenen Druckbeanspruchung und den Fließprozessen wird die Vorspannkraft kontinuierlich verringert. Wird dabei eine mindestens nötige Schraubenvorspannkraft bzw. Mindestvorspannkraft unterschritten, so ist die Funktionalität der Verschraubung nicht mehr gewährleistet.

Die Druckschrift DE 10 2008 058 917 A1 beschreibt ein Verfahren zum Fügen von miteinander zu verbindenden, überlappend angeordneten Werkstücken an einer Fügestelle, die durch berührungslose Wärmezufuhr mit einem Laserstrahl erwärmt werden, bis die Werkstücke ein für das Fügen ausreichendes Formänderungsvermögen erhalten und dann mit Hilfe eines Fügewerkzeugs unter Verwendung eines Fügeelements lokal plastisch umgeformt werden. Hierbei kann eine feste Verbindung von Werkstücken erzeugt werden, bei der die notwendige Fügekraft und der Verzug der Werkstücke möglichst gering sind.

Ein Verfahren zur Herstellung einer Nagelverbindung zwischen wenigstens zwei nicht vorgelochten Bauteilen in einem Fügebereich mittels eines von einem Setzgerät eingetriebenen Nagels ist aus der Druckschrift DE 10 2010 006 400 A1 bekannt. Hier wird der Fügebereich der beiden Bauteile vor einem Eintreiben des Nagels lokal thermisch erweicht. Ein ähnliches Verfahren ist auch in der Druckschrift DE 10 2010 035 951 A1 beschrieben. In der Druckschrift JP 2012/172842 A ist beschrieben, dass eine Schraube erst erwärmt und dann in ein Bauteil geschraubt wird.

Die Druckschrift EP 0 392 568 A1 offenbart die Verbindung von thermoplastischen Bauteilen mit einem thermoplastischen Befestigungselement. Die Druckschrift DE 10 2014 203 761 A1 offenbart ein Verfahren zur Montage eines Bauteils aus einem faserverstärkten Kunststoff im Kraftfluss einer Klemmverbindung, wobei der Kunststoff in einem Montagebereich erhitzt und lokal verpresst wird.

Vor diesem Hintergrund werden ein Verfahren und eine Anordnung mit den Merkmalen der unabhängigen Patentansprüche vorgestellt. Ausführungen des Verfahrens und der Anordnung gehen aus den abhängigen Patentansprüchen und der Beschreibung hervor.

Das erfindungsgemäße Verfahren ist zum Verbinden eines ersten Bauteils mit mindestens einem zweiten Bauteil vorgesehen, wobei das erste Bauteil aus einem mit Fasern verstärkten Kunststoff gebildet wird. Dabei wird mindestens das erste Bauteil in einem Fügebereich, in dem das mindestens eine erste Bauteil mit dem mindestens einen zweiten Bauteil zu verbinden ist, auf eine Temperatur, die mindestens so groß wie eine Glasübergangstemperatur des mit Fasern verstärkten Kunststoffs ist, erwärmt und in dem Fügebereich mechanisch belastet.

In der Regel wird mindestens das erste Bauteil in dem Fügebereich auf eine Temperatur erwärmt, die größer als eine Einsatztemperatur ist, der das mit dem mindestens einen zweiten Bauteil verbundene erste Bauteil bei einem laufenden Betrieb ausgesetzt ist.

Erfindungsgemäß wird mindestens das erste Bauteil in dem Fügebereich auf eine Temperatur erwärmt, die geringer als eine Zersetzungstemperatur des mit Fasern verstärkten Kunststoffs ist.

Üblicherweise wird mindestens das erste Bauteil in dem Fügebereich zuerst auf die Temperatur, die größer als die Glasübergangstemperatur ist, erwärmt und erst danach mechanisch belastet.

Bei Umsetzung des Verfahrens werden das erste Bauteil und das mindestens eine zweite Bauteil in dem Fügebereich, erfindungsgemäß mit mindestens einem Befestigungselement, miteinander verbunden.

In möglicher Ausgestaltung wird und/oder ist das mindestens eine zweite Bauteil, wie das erste Bauteil, aus einem mit Fasern verstärkten Kunststoff gebildet.

Ergänzend ist bei dem Verfahren zum Verbinden des ersten Bauteils mit mindestens einem zweiten Bauteil möglich, dass das mindestens eine zweite Bauteil ebenfalls aus einem mit Fasern verstärkten Kunststoff gebildet und in einem Fügebereich auf eine Temperatur, die mindestens so groß wie eine Glasübergangstemperatur des mit Fasern verstärkten Kunststoffs ist, erwärmt und in dem Fügebereich mechanisch belastet wird.

Außerdem wird das mindestens eine zweite Bauteil in dem Fügebereich auf eine Temperatur erwärmt, die größer als eine Einsatztemperatur ist, der das mit dem ersten Bauteil verbundene mindestens eine zweite Bauteil bei einem laufenden Betrieb ausgesetzt ist.

Das mindestens eine zweite Bauteil wird auf eine Temperatur erwärmt, die geringer als eine Zersetzungstemperatur des mit Fasern verstärkten Kunststoffs ist.

In der Regel wird das mindestens eine zweite Bauteil in dem Fügebereich zuerst auf die Temperatur, die größer als die Glasübergangstemperatur ist, erwärmt und erst danach mechanisch belastet.

Somit sind mit dem Verfahren mindestens zwei Bauteile miteinander zu verbinden, wobei mindestens eines der Bauteile aus einem mit Fasern verstärkten Kunststoff gebildet ist, wobei sämtliche Bauteile in dem Fügebereich auf dieselbe Temperatur erwärmt werden.

Das erwärmte erste Bauteil wird über das mindestens eine Befestigungselement mit dem mindestens einen in der Regel ebenfalls erwärmten zweiten Bauteil verbunden, wobei mindestens das erste Bauteil und ggf. auch das mindestens eine zweite Bauteil beim Verbinden durch das mindestens eine Befestigungselement mechanisch belastet wird bzw. werden.

Hierzu wird mindestens in das erste Bauteil und ggf. auch in das mindestens eine zweite Bauteil in dem Fügebereich ein Loch gebohrt, in das das mindestens eine Befestigungselement eingefügt wird.

In Ausgestaltung ist vorgesehen, dass das mindestens eine Befestigungselement auf eine Temperatur, die mindestens so groß wie eine Glasübergangstemperatur des mit Fasern verstärkten Kunststoffs ist, erwärmt wird. In der Regel wird das mindestens eine Befestigungselement, das in dem Fügebereich angeordnet wird, auf eine Temperatur erwärmt, die größer als eine Einsatztemperatur ist, der zumindest das erste Bauteil bei einem laufenden Betrieb ausgesetzt ist. Weiterhin wird das mindestens eine Befestigungselement auf eine Temperatur erwärmt, die geringer als eine Zersetzungstemperatur des ersten Bauteils ist, das den mit Fasern verstärkten Kunststoff aufweist.

Der zu erwärmende Fügebereich weist ein Querschnittsmaß, bspw. einen Durchmesser, auf, das maximal so groß wie ein Querschnittsmaß, bspw. ein Durchmesser, mindestens eines Objekts, bspw. eines Werkzeugs und/oder eines Teils des mindestens einen Befestigungselements ist, mit dem mindestens das erste Bauteil und ggf. auch das mindestens eine zweite Bauteil mechanisch belastet wird bzw. werden.

Die erfindungsgemäße Anordnung ist zum Verbinden eines ersten Bauteils mit mindestens einem zweiten Bauteil ausgebildet, wobei mindestens das erste Bauteil aus einem mit Fasern verstärkten Kunststoff gebildet wird, wobei die Anordnung eine Wärmequelle und mindestens ein mechanisches Werkzeug aufweist. Die Wärmequelle ist dazu ausgebildet, mindestens das erste Bauteil in einem Fügebereich auf eine Temperatur, die mindestens so groß wie eine Glasübergangstemperatur des mit Fasern verstärkten Kunststoffs ist, zu erwärmen. Das mindestens eine mechanische Werkzeug ist dazu ausgebildet, das erste Bauteil zum Bereitstellen einer Verbindung mit dem mindestens einen zweiten Bauteil in dem Fügebereich mechanisch zu belasten.

In der Regel ist das mindestens eine mechanische Werkzeug dazu ausgebildet, mindestens das erste Bauteil in dem Fügebereich direkt mechanisch zu belasten.

Alternativ oder ergänzend ist das mindestens eine mechanische Werkzeug dazu ausgebildet, mindestens ein Befestigungselement zu beaufschlagen, über das das erste Bauteil in dem Fügebereich mit dem mindestens einen zweiten Bauteil zu verbinden ist, wobei mindestens das erste Bauteil mit dem mindestens einen Befestigungselement indirekt bzw. mittelbar mechanisch zu belasten ist.

Das vorgestellte Verfahren ist bspw. zur Verschraubung von Bauteilen aus endlosfaserverstärktem Kunststoff mit einer Schraube als dem mindestens einen Befestigungselement vorgesehen. Dabei weist die Schraube einen Stift mit einem Gewinde auf, an dem ein Kopf mit einem Querschnittsmaß, in der Regel einem Durchmesser, befestigt ist. Auf den Stift ist eine Mutter aufzuschrauben. Die zu verbindenden Bauteile sind zwischen dem Kopf und der Mutter als Teile des mindestens einen Befestigungselements zu pressen. Der zuvor zu erwärmende Fügebereich, in dem die beiden Bauteile miteinander zu verbinden sind, befindet sich zwischen diesen beiden Teilen. Das Querschnittsmaß des Fügebereichs ist mindestens so groß wie ein Querschnittsmaß eines kleinsten der beiden Teile des Befestigungselements zu wählen.

Bei Durchführung des Verfahrens wird berücksichtigt, dass in einer Dickenrichtung mindestens eines der Bauteile ein Kriechen bzw. Wegfließen der polymeren Matrix mit den darin eingebetteten Fasern in Verbindung mit Umlagerungsvorgängen, bspw. Verschiebungen der Fasern bzw. Faserbündel, bspw. in einer Lagen-Ebene senkrecht zum Kraftschluss, auftreten kann.

Diese Umlagerungsvorgänge der Faserbündel erfolgen so lange bis keine Behinderung innerhalb eines Laminats des mindestens einen Bauteils auftritt. Wenn eine Behinderung des Fließens erfolgt, kriecht der mit Fasern verstärkte Kunststoff in Dickenrichtung nicht weiter.

Treten diese Kriechvorgänge in einem Lasteinleitungsbereich kraftschlüssiger Verbindungen unter Betriebsbedingungen auf, sinkt eine Vorspannung der Bauteile und damit die Belastbarkeit bis hin zum eventuellen kompletten Funktionsausfall.

Derartige Kriechvorgänge und/oder Umlagerungsvorgänge werden bei Durchführung des Verfahrens bereits beim Herstellen der kraftschlüssigen Verbindung erzeugt, so dass diese im späteren Betrieb unter Einsatzbedingungen der Bauteile nicht mehr auftreten können oder zumindest stark vermindert werden, da sie quasi vorweg genommen sind.

Zu diesem Zweck wird ein thermischer Prozess in einer Kombination mit einer mechanischen Pressung mindestens des ersten Bauteils vor und/oder während einem Fügen der bspw. kraftschlüssigen Verbindung durchgeführt. Die Temperatur liegt dabei oberhalb der Glasübergangstemperatur einer verwendeten Kunststoffmatrix des mit Fasern verstärkten Kunststoffs. Allerdings ist diese Temperatur geringer als die Zersetzungstemperatur des mit Fasern verstärkten Kunststoffs. Die Temperatur ist größer als eine spätere Einsatztemperatur der Bauteile unter Betriebsbedingungen.

In der Regel ist das gesamte erste Bauteil zu erwärmen, zumindest ist eine lokale Erwärmung im Fügebereich vorgesehen.

Zum Erwärmen können verschiedene Energiequellen genutzt werden, bspw. ein Wärmeofen, ein Laser, eine induktive Wärmequelle, ein IR-Strahler oder eine erwärmte, den Fügebereich berührende Vorrichtung unter Nutzung einer Wärmeleitung.

Die mechanische Belastung, bspw. Pressung, im Fügebereich erfolgt bspw. in einem kreisförmigen Bereich, dessen Durchmesser so klein wie möglich gewählt wird, jedoch nicht kleiner als ein größter Durchmesser eines Teils des mindestens einen Befestigungselements, bspw. eines kraftschlüssigen Verbindungselementes zuzüglich eines Sicherheitsbereichs ist. Falls das Befestigungselement als Schraube ausgebildet ist, weist es als Teile einen Stift mit einem Gewinde sowie einen Kopf auf. Demnach drückt der Kopf des Befestigungselements auf eine Oberfläche des ersten Bauteils und belastet dieses mechanisch. Der im Rahmen des Verfahrens zu erwärmende Fügebereich weist demnach ein Querschnittsmaß, in der Regel einen Durchmesser, auf, das bzw. der mindestens so groß wie das Querschnittsmaß, in der Regel ein Durchmesser, des Kopfs des Befestigungselements ist.

Der Sicherheitsbereich ist hierbei so zu wählen, dass alle auftretenden Fertigungsanforderungen, z. B. Positioniertoleranzen des mindestens einen Werkzeugs oder benötigte Auflageflächen, Berücksichtigung finden.

Eine Höhe einer Presskraft zur mechanischen Belastung ist so zu wählen, dass Faserbündel in einer erwärmten und erweichten Matrix des mindestens einen Bauteils verschoben werden können, jedoch keine Fasern brechen.

Eine mechanische Pressung als Belastung wird vorzugsweise über einen Stempel als Werkzeug aufgebracht. Zustellbewegungen werden kraftgesteuert, in Ausnahmefällen auch weggesteuert, ausgeführt.

Der Stempel zum Pressen ist außen verrundet, wobei scharfe Kanten zu vermeiden sind. Eine Pressfläche im Fügebereich ist in der Regel eben, bei hochvernetzten Matrixsystemen ist eine leichte Balligkeit mit großen Radien vorgesehen.

Die Erwärmung und die mechanische Pressung können zeitlich nacheinander, in unterschiedlichen Fertigungseinrichtungen, bereitgestellt werden. Dabei erfolgt die Erwärmung als thermischer Prozess zuerst. Bei der Wahl der Temperatur sind Prozesszeiten zu berücksichtigen. Ein Abkühlen des Fügebereichs während der mechanischen Pressung unter die Glasübergangstemperatur wird so lange verzögert, bis die Umlagerungsvorgänge der Fasern im Kunststoff unter der Pressung abgeschlossen sind. Erst danach kann die Temperatur im Bauteil unterhalb der Glasübergangstemperatur sinken und die Umlagerung der Fasern somit fixieren. Wenn die Temperatur niedrig genug ist, kann die Pressung gelöst und das kraftschlüssige Befestigungs- und/oder Verbindungelement gesetzt werden.

Üblicherweise ist eine Kombination des thermischen Prozesses und der mechanischen Pressung mit der Anordnung als Betriebsmittel vorgesehen, wobei bspw. der Stempel als Werkzeug zum Pressen selbst zur Erwärmung unter Nutzung einer Wärmeleitung eingesetzt werden kann. Prozessparameter wie eine Temperaturkurve, eine Haltezeit oder eine Zustellbewegung sind auf die Anwendung abzustimmen.

Prinzipiell kann ein Teil der kraftschlüssigen Verbindung für diese Zwecke ebenfalls, bspw. über die Auflageflächen für die Wärmeleitung oder zum Aufbringen der Pressung, genutzt werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt in schematischer Darstellung eine Ausführungsform der erfindungsgemäßen Anordnung.
Figur 2 zeigt ein Diagramm, das sich bei einer Ausführungsform des erfindungsgemäßen Verfahrens ergibt.

Die Figuren werden zusammenhängend und übergreifend beschrieben, gleichen Komponenten sind dieselben Bezugsziffern zugeordnet.

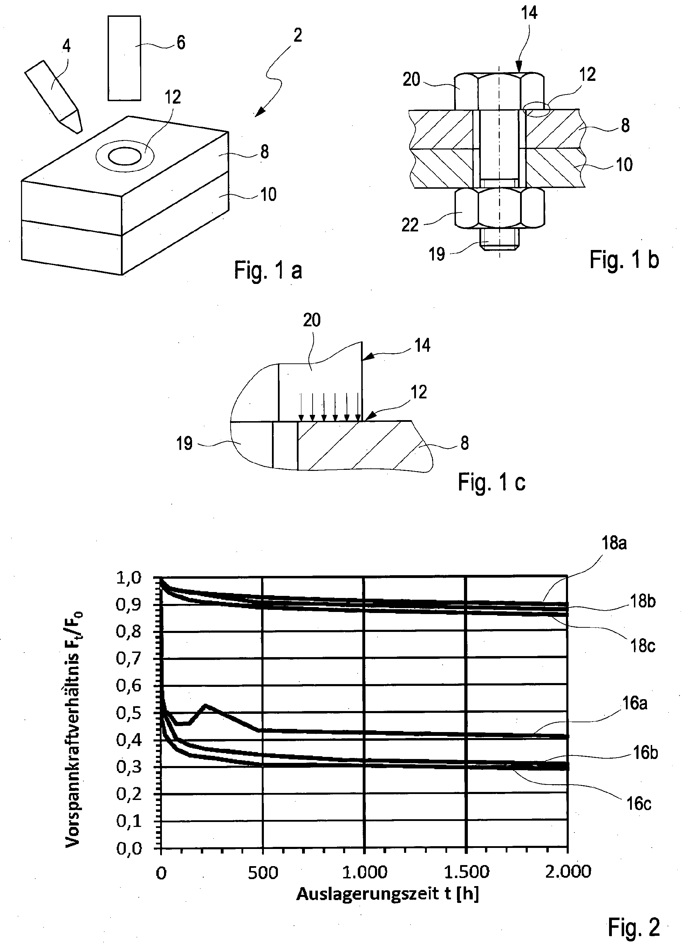

Figur 1a zeigt in schematischer Darstellung eine Ausführungsform der erfindungsgemäßen Anordnung 2, die eine Wärmequelle 4 und hier ein als Stempel ausgebildetes Werkzeug 6 aufweist. Diese Anordnung 2 ist hier zum Verbinden eines ersten Bauteils 8 mit einem zweiten Bauteil 10 ausgebildet, wobei hier vorgesehen ist, dass beide Bauteile 8, 10 aus einem mit Fasern verstärkten Kunststoff gebildet sind. Hierbei ist vorgesehen, dass ein Fügebereich 12 der beiden Bauteile 8, 10, in dem die beiden Bauteile 8, 10 über ein Befestigungselement 14 miteinander zu verbinden sind, auf eine Temperatur erwärmt wird, die mindestens so groß wie eine Glasübergangstemperatur des mit Fasern verstärkten Kunststoffs der beiden Bauteile 8, 10 ist. Dieses Befestigungselement 14 umfasst als Teile eine Schraube mit einem Stift 19 und einen daran befestigten Kopf 20, wobei auf den Stift 19 eine Mutter 22 zu schrauben ist. Sobald die beiden Bauteile 8, 10 in dem Fügebereich 12 zumindest auf die Glasübergangstemperatur erwärmt worden sind, werden die beiden Bauteile 8, 10 mit dem Werkzeug 6 in dem Fügebereich 12 gepresst und somit mechanisch belastet.

Bei einer Ausführungsform des erfindungsgemäßen Verfahrens, die hier mit der vorgestellten Anordnung 2 durchzuführen ist, ist zunächst vorgesehen, dass durch die beiden Bauteile 8, 10 im Fügebereich 12 vor dem Erwärmen durch die Wärmequelle 4 ein Loch für das Befestigungselement 14, hier für den Stift 19, gebohrt wird. Erst danach werden die beiden Bauteile 8, 10 im Fügebereich 12 erwärmt und beim Einsetzen des Befestigungselements 14 mechanisch belastet. Dabei ist hier ergänzend vorgesehen, dass auch das Befestigungselement 14 zumindest auf die Glasübergangstemperatur erwärmt wird, bevor die beiden Bauteile 8, 10 mechanisch belastet werden. Außerdem ist es möglich, dass die beiden erwärmten Bauteile 8, 10 durch eine Kraft des Befestigungselements 14, bspw. durch eine Vorspannkraft einer Schraube, während einer Montage belastet werden.

Hierbei werden die beiden Bauteile 8, 10 zwischen einem Kopf 20 des als Schraube ausgebildeten Befestigungselements 14 und einer Mutter 22, die auf einen Stift 19 der Schraube, der ein Gewinde aufweist, aufgeschraubt ist, zusammengepresst. Ein Querschnittsmaß, hier ein Durchmesser, des Fügebereichs 12 ist mindestens so groß wie ein maximaler Durchmesser des Kopfs 20 und/oder der Mutter 22 des Befestigungselements 14.

Das Diagramm aus Figur 2 umfasst eine Abszisse, entlang der eine Auslagerungszeit t in Stunden (h) aufgetragen ist. Darüber ist entlang einer Ordinate ein Vorspannkraftverhältnis Fₜ/F₀ aufgetragen, wobei eine zeitabhängige Vorspannkraft Fₜ im Laufe der Zeit asymptotisch abnimmt.

Das Vorspannkraftverhältnis einer exemplarischen Verbindung weist zum Zeitpunkt t = 0 den Wert 1 auf, wobei zum dem Zeitpunkt t = 0 bei der Montage eine maximale Vorspannkraft Fₜ₌₀ = F₀ herrscht. Die Abszisse zeigt die Auslagerungszeit der Verbindung bei konstanter Temperatur.

Hierbei zeigen erste Kurven 16a, 16b, 16c einen zeitlichen Verlauf des Vorspannkraftverhältnisses eines Bauteils aus einem mit Fasern verstärktem Kunststoff, das zum Verbinden mit einem weiteren Bauteil nach dem Stand der Technik konventionell bei Raumtemperatur verschraubt und somit lediglich mechanisch belastet wird.

Dagegen zeigen die Kurven 18a, 18b, 18c mögliche zeitliche Verläufe des Vorspannkraftverhältnisses eines ersten Bauteils 8 aus mit Fasern verstärktem Kunststoff, das bei Durchführung der Ausführungsform des erfindungsgemäßen Verfahrens mit mindestens einem weiteren Bauteil 10 verbunden wird, wobei mindestens der Fügebereich 12 des ersten Bauteils 8 auf eine Temperatur von hier 150 °C erwärmt wird, die mindestens so groß wie die Glasübergangstemperatur des mit Fasern verstärkten Kunststoffs ist, wobei das jeweils erste Bauteil 8 in dem Fügebereich 12 mechanisch belastet wird, wenn dessen Temperatur in dem Fügebereich 12 mindestens so groß wie die Glasübergangstemperatur ist. Dabei ist vorgesehen, dass das erste Bauteil 8 mit dem jeweils mindestens einen zweiten Bauteil 10 unter Bereitstellung einer Verschraubung als Verbindung warm verschraubt wird.

Wie die Kurven 18a, 18b, 18c zeigen, bewirkt das Verfahren eine signifikante Verbesserung einer Stabilität der Vorspannkraft Fₜ einer derartigen als Verschraubung ausgebildeten Verbindung der Bauteile 8, 10. Dabei wird ein starker Abfall der Vorspannkraft Fₜ nach einer ersten Temperaturbelastung der Verbindung im Vergleich zu konventionellen Verbindungen (Kurven 16a, 16b, 16c) während der Auslagerungszeit, bei der eine Temperatur herrscht, die geringer als die Glasübergangstemperatur ist, effektiv verringert.

## Patentansprüche

1. Verfahren zum Verbinden eines ersten Bauteils (8) mit mindestens einem zweiten Bauteil (10), wobei mindestens das erste Bauteil (8) aus einem mit Fasern verstärkten Kunststoff gebildet wird, wobei mindestens das erste Bauteil (8) in einem Fügebereich (12), in dem das mindestens eine erste Bauteil (8) mit dem mindestens einen zweiten Bauteil (10) zu verbinden ist, erwärmt und in dem Fügebereich (12) durch Pressung mechanisch belastet wird, wobei das erste Bauteil (8) über mindestens ein Befestigungselement (14) mit dem mindestens einen zweiten Bauteil (10) verbunden wird, wobei mindestens das erste Bauteil (8) beim Verbinden durch das mindestens eine Befestigungselement (14) mechanisch belastet wird, wobei mindestens in das erste Bauteil (8) in dem Fügebereich (12) ein Loch gebohrt wird, in das das mindestens eine Befestigungselement (14) eingefügt wird,
**dadurch gekennzeichnet, dass**
das mindestens eine erste Bauteil (8) in dem Fügebereich auf eine Temperatur, die mindestens so groß wie eine Glasübergangstemperatur des mit Fasern verstärkten Kunststoffs und geringer als eine Zersetzungstemperatur des mit Fasern verstärkten Kunststoffs ist, erwärmt wird, wobei ein Abkühlen des Fügebereichs (12) während der mechanischen Pressung unter die Glasübergangstemperatur so lange verzögert wird, bis Umlagerungsvorgänge der Fasern im Kunststoff unter der Pressung abgeschlossen sind.

2. Verfahren nach Anspruch 1, bei dem das erste Bauteil (8) in dem Fügebereich (12) auf eine Temperatur erwärmt wird, die größer als eine Einsatztemperatur ist, der das mit dem mindestens einen zweiten Bauteil (10) verbundene erste Bauteil (8) bei einem laufenden Betrieb ausgesetzt ist.

3. Verfahren nach Anspruch 1 oder 2, bei dem mindestens das erste Bauteil (8) in dem Fügebereich (12) zuerst auf die Temperatur, die größer als die Glasübergangstemperatur ist, erwärmt und erst danach mechanisch belastet wird.

4. Verfahren nach einem der voranstehenden Ansprüche, bei dem das erste Bauteil (8) und das mindestens eine zweite Bauteil (10) in dem Fügebereich (12) miteinander verbunden werden.

5. Verfahren nach einem der voranstehenden Ansprüche, bei dem das mindestens eine zweite Bauteil (10), wie das erste Bauteil (8), aus einem mit Fasern verstärkten Kunststoff gebildet wird.

6. Verfahren nach einem der voranstehenden Ansprüche, bei dem das mindestens eine Befestigungselement (14) auf eine Temperatur, die mindestens so groß wie die Glasübergangstemperatur des mit Fasern verstärkten Kunststoffs ist, erwärmt wird.

7. Verfahren nach einem der voranstehenden Ansprüche, bei dem der zu erwärmende Fügebereich (12) ein Querschnittsmaß aufweist, das maximal so groß wie ein Querschnittsmaß eines Objekts ist, mit dem mindestens das erste Bauteil (8) mechanisch belastet wird.

8. Anordnung zum Verbinden eines ersten Bauteil (8) mit mindestens einem zweiten Bauteil (10), wobei mindestens das erste Bauteil (8) aus einem mit Fasern verstärkten Kunststoff gebildet wird, wobei die Anordnung (2) eine Wärmequelle (4) und mindestens ein mechanisches Werkzeug (6) aufweist, wobei die Wärmequelle (4) dazu ausgebildet ist, mindestens das erste Bauteil (8) in einem Fügebereich (12), in dem das mindestens eine erste Bauteil (8) mit dem mindestens einen zweiten Bauteil (10) zu verbinden ist, zu erwärmen, und wobei das mindestens eine mechanische Werkzeug (6) dazu ausgebildet ist, mindestens das erste Bauteil (8) in dem Fügebereich (12) durch Pressung mechanisch zu belasten, wobei das erste Bauteil (8) über mindestens ein Befestigungselement (14) mit dem mindestens einen zweiten Bauteil (10) zu verbinden ist, wobei mindestens das erste Bauteil (8) beim Verbinden durch das mindestens eine Befestigungselement (14) mit dem mindestens einen mechanischen Werkzeug (6) mechanisch belastet wird, wobei in das erste Bauteil (8) in dem Fügebereich (12) ein Loch gebohrt wird, in das das mindestens eine Befestigungselement (14) eingefügt wird,
**dadurch gekennzeichnet, dass**
die Wärmequelle (4) dazu ausgebildet ist, das mindestens eine erste Bauteil (8) in dem Fügebereich auf eine Temperatur, die mindestens so groß wie eine Glasübergangstemperatur des mit Fasern verstärkten Kunststoffs und geringer als eine Zersetzungstemperatur des mit Fasern verstärkten Kunststoffs ist, zu erwärmen ist, wobei ein Abkühlen des Fügebereichs (12) während der mechanischen Pressung unter die Glasübergangstemperatur so lange zu verzögern ist, bis Umlagerungsvorgänge der Fasern im Kunststoff unter der Pressung abgeschlossen sind.

9. Anordnung nach Anspruch 8, bei der das mindestens eine mechanische Werkzeug (6) dazu ausgebildet ist, mindestens das erste Bauteil (8) in dem Fügebereich (12) direkt mechanisch zu belasten.

10. Anordnung nach Anspruch 8 oder 9, bei der das mindestens eine mechanische Werkzeug (6) dazu ausgebildet ist, das Befestigungselement (14) zu beaufschlagen, über das das erste Bauteil (8) mit dem mindestens einen zweiten Bauteil (10) zu verbinden ist.

## Claims

1. Method for connecting a first component (8) with at least one second component (10), wherein at least the first component (8) is formed from a plastic reinforced with fibres, wherein at least the first component (8) is heated in a joining region (12) in which the at least one first component (8) is to be connected with the at least one second component (10) and is in the joining region (12) mechanically loaded by pressing, wherein the first component (8) is connected by means of at least one fastening element (14) with the at least one second component (10), wherein at least the first component (8) when being connected is mechanically loaded by the at least one fastening element (14), wherein a hole is bored at least into the first component (8) in the joining region (12) into which hole the at least one fastening element (14) is inserted,
**characterised in that**
the at least one first component (8) is heated in the joining region to a temperature which is at least as high as a glass transition temperature of the plastic reinforced with fibres and lower than a decomposition temperature of the plastic reinforced with fibres, wherein a cooling of the joining region (12) during the mechanical pressing below the glass transition temperature is delayed until the rearrangement processes of the fibres in the plastic caused by the pressing are finished.

2. Method according to claim 1, in which the first component (8) is heated in the joining region (12) to a temperature which is greater than the working temperature to which the first component (8) connected with the at least one second component (10) is subjected during active operation.

3. Method according to claim 1 or 2, in which at least the first component (8) is first heated in the joining region (12) to the temperature which is greater than the glass transition temperature and only thereafter is mechanically loaded.

4. Method according to any of the preceding claims, in which the first component (8) and the at least one second component (10) are mutually connected in the joining region (12).

5. Method according to any of the preceding claims, in which the at least one second component (10), like the first component (8), is made of a plastic reinforced with fibres.

6. Method according to any of the preceding claims, in which the at least one fastening element (14) is heated to a temperature which is at least as high as the glass transition temperature of the plastic reinforced with fibres.

7. Method according to any of the preceding claims, in which the joining region (12) to be heated has a cross-sectional measurement which is at the most as great as a cross-sectional measurement of an object with which at least the first component (8) is mechanically loaded.

8. Arrangement for connecting a first component (8) with at least one second component (10), wherein at least the first component (8) is formed from a plastic reinforced with fibres, wherein the arrangement (2) has a heat source (4) and at least one mechanical tool (6), wherein the heat source (4) is configured to heat at least the first component (8) in a joining region (12) in which the at least one first component (8) is to be connected with the at least one second component (10), and wherein the at least one mechanical tool (6) is configured to mechanically load at least the first component (8) in the joining region (12) by pressing, wherein the first component (8) is to be connected by means of at least one fastening element (14) with the at least one second component (10), wherein at least the first component (8) during the connection by means of the at least one fastening component (14) is mechanically loaded with the at least one mechanical tool (6), wherein into the first component (8) in the joining region (12) is bored a hole into which the at least one fastening element (14) is inserted,
**characterised in that**
the heat source (4) is configured to heat the at least one first component (8) in the joining region to a temperature which is at least as high as a glass transition temperature of the plastic reinforced with fibres and lower than a decomposition temperature of the plastic reinforced with fibres, wherein a cooling of the joining region (12) during the mechanical pressing below the glass transition temperature is to be delayed until the rearrangement processes of the fibres in the plastic caused by the pressing are finished.

9. Arrangement according to claim 8, in which the at least one mechanical tool (6) is configured to load in a directly mechanical manner at least the first component (8) in the joining region (12).

10. Arrangement according to claim 8 or 9, in which the at least one mechanical tool (6) is designed to be applied to the fastening element (14) by means of which the first component (8) is to be connected with the at least one second component (10).

## Revendications

1. Procédé pour assembler un premier composant (8) et au moins un second composant (10), dans lequel au moins le premier composant (8) est constitué d'une matière plastique renforcée par des fibres, dans lequel au moins le premier composant (8), dans une zone de jonction (12) dans laquelle le au moins un premier composant (8) doit être assemblé au au moins un second composant (10), est chauffé et soumis à une contrainte mécanique dans la zone de jonction (12) par compression, dans lequel le premier composant (8) est assemblé au au moins un second composant (10) via au moins un élément de fixation (14), dans lequel au moins le premier composant (8) est soumis à une contrainte mécanique pendant un assemblage via le au moins un élément de fixation (14), dans lequel un trou est percé au moins dans le premier composant (8) dans la zone de jonction (12), dans lequel le au moins un élément de fixation (14) est inséré,
**caractérisé en ce que**
le au moins un premier composant (8) dans la zone de jonction est chauffé à une température qui est au moins aussi grande qu'une température de transition vitreuse de la matière plastique renforcée de fibres et inférieure à une température de décomposition de la matière plastique renforcée par les fibres, dans lequel le refroidissement de la zone de jonction (12) est retardé pendant la compression mécanique en dessous de la température de transition vitreuse jusqu'à ce que des processus de réarrangement des fibres dans la matière plastique sous la compression soient terminés.

2. Procédé selon la revendication 1, dans lequel le premier composant (8) est chauffé dans la zone de jonction (12) à une température qui est supérieure à une température d'utilisation à laquelle le premier composant (8) assemblé au au moins un second composant (10) a été exposé en fonctionnement.

3. Procédé selon la revendication 1 ou 2, dans lequel au moins le premier composant (8) est chauffé, dans la zone de jonction (12), à une température supérieure à la température de transition vitreuse, et est ensuite soumis à une contrainte mécanique.

4. Procédé selon l'une des revendications précédentes, dans lequel le premier composant (8) et le au moins un second composant (10) sont assemblés l'un à l'autre dans la zone de jonction (12).

5. Procédé selon l'une quelconque des revendications précédentes, dans lequel le au moins un second composant (10), comme le premier composant (8), est formé à partir d'une matière plastique renforcée par des fibres.

6. Procédé selon l'une quelconque des revendications précédentes, dans lequel le au moins un élément de fixation (14) est chauffé à une température qui est au moins aussi élevée que la température de transition vitreuse de la matière plastique renforcée par des fibres.

7. Procédé selon l'une quelconque des revendications précédentes, dans lequel la zone de jonction (12) à chauffer présente une dimension de section transversale qui est au plus aussi grande qu'une dimension de section transversale d'un objet avec lequel au moins le premier composant (8) est soumis à une contrainte mécanique.

8. Ensemble pour assembler un premier composant (8) et au moins un second composant (10), dans lequel au moins le premier composant (8) est constituée d'une matière plastique renforcée par des fibres, dans lequel l'ensemble (2) présente une source de chaleur (4) et au moins un outil mécanique (6), dans lequel la source de chaleur (4) est conçue pour chauffer au moins le premier composant (8) dans une zone de jonction (12), dans laquelle le au moins un premier composant (8) doit être assemblé au au moins un second composant (10), et dans lequel le au moins un outil mécanique (6) est conçu pour appliquer une contrainte mécanique au moins au premier composant (8) dans la zone de jonction (12) par compression, dans lequel le premier composant (8) doit être assemblé au au moins second composant (10) via au moins un élément de fixation (14), dans lequel au moins le premier composant (8) est soumis à une contrainte mécanique pendant l'assemblage via le au moins un élément de fixation (14) avec le au moins un outil mécanique (6), dans lequel un trou est percé dans le premier composant (8) dans la zone de jonction (12), dans lequel le au moins un élément de fixation (14) est inséré,
**caractérisé en ce que**
la source de chaleur (4) est conçue pour chauffer le au moins un premier composant (8) dans la zone de jonction à une température au moins aussi grande que la température de transition vitreuse de la matière plastique renforcée par des fibres et inférieure à la température de décomposition de la matière plastique renforcée par les fibres, dans lequel un refroidissement de la zone de jonction (12) est retardé pendant la compression mécanique en dessous de la température de transition vitreuse jusqu'à ce que des processus de réarrangement des fibres dans la matière plastique sous la compression soient terminés.

9. Ensemble selon la revendication 8, dans lequel le au moins un outil mécanique (6) est conçu pour soumettre à une contrainte mécanique au moins le premier composant (8) dans la zone de jonction (12).

10. Ensemble selon la revendication 8 ou 9, dans lequel le au moins un outil mécanique (6) est conçu pour agir sur l'élément de fixation (14) via lequel le premier composant (8) est assemblé au au moins un second composant (10).
